# FASCICULE DE BREVET EUROPEEN

(11) **EP 0 466 603 B1**
(45) Date de publication et mention de la délivrance du brevet: **27.09.1995**
(21) Numéro de dépôt: 91401949.2
(22) Date de dépôt: 12.07.1991
(51) Int. Cl.: B22F 7/02, F28F 21/04, C04B 35/80

(54) **Structures réfractaires refroidies et procédé pour leur fabrication**
Gekühlte, feuerfeste Körper und Verfahren zu ihrer Herstellung
Cooled refractory structures and method of manufacturing them

(30) Priorité: 13.07.1990 FR 9008972
(43) Date de publication de la demande: 15.01.1992
(73) Titulaire: SOCIETE EUROPEENNE DE PROPULSION, 92150 Suresnes (FR)
(72) Inventeur: Boury, Didier P., F-33000 Bordeaux (FR); Heraud, Louis G., F-33200 Bordeaux (FR)
(74) Mandataire: Joly, Jean-Jacques

(56) Documents cités:
- EP-A- 0 260 850
- WO-A-85/05352
- GB-A- 1 528 160
- US-A- 2 658 332
- US-A- 4 580 524

## Description

La présente invention concerne des structures ou éléments de structures refroidies.

Certaines réalisations demandent ou demanderont des éléments de structures réfractaires capables de supporter le contact avec des gaz de températures extrêmement élevées, par exemple 1 700 à 3 400°C, pendant de longues durées.

Il en est ainsi notamment pour des parois de chambres de combustion de moteurs combinés, ou pour des parties de structures aérodynamiques d'avions spatiaux hypersoniques, notamment la pointe avant, les bords d'attaque de voilure et la carène de prise d'air.

Des parois en matériau métallique, sans revêtement de protection, exigeraient un refroidissement important avec circulation d'un fluide ce qui, lorsque le fluide de refroidissement utilisé est de l'hydrogène liquide (l'un des ergols alimentant le moteur), se traduirait par une surconsommation importante d'hydrogène, ainsi que par une plus grande complexité du circuit de refroidissement. Un revêtement de protection thermique, tel qu'une céramique, pourrait être formé sur les parois métalliques, mais pourrait se révéler insuffisamment efficace et, en outre, constituerait une source de risques en cas d'écaillage du revêtement.

En dépit de leur caractère réfractaire, des parois en matériau céramique nécessiteraient aussi un refroidissement actif, certes à un degré moindre que des parois métalliques.

Pour des raisons de tenue mécanique, de tenue aux chocs et de ténacité insuffisantes, l'utilisation de céramiques frittées est difficilement envisageable.

Il n'en est pas de même pour les matériaux composites à matrice réfractaire (carbone ou céramique) dont les propriétés thermostructurales sont bien connues.

Les composites à matrice réfractaire sont constitués d'un renfort fibreux en fibres réfractaires (fibres en carbone ou fibres céramiques) densifié par une céramique constituant la matrice du matériau composite.

L'utilisation de composites à matrice réfractaire pour la fabrication de structures réfractaires refroidies pose toutefois différents problèmes.

En particulier, afin de favoriser l'évacuation du flux thermique, il est souhaitable que, du côté opposé à celui exposé aux températures élevées, la structure soit en un matériau conducteur de la chaleur. Or, l'utilisation de matériaux différents pour constituer la paroi soulève des difficultés en raison des dilatations différentielles entre ces matériaux, celles-ci étant importantes aux températures de service envisagées.

Par ailleurs, si l'on cherche à former des canaux ou à intégrer des conduits dans le composite pour la circulation de fluide de refroidissement, il se pose un difficile problème d'étanchéité. L'intégration de conduits dans un matériau composite réfractaire soulève d'autres difficultés liées aussi aux différences de coefficients de dilatation thermique entre les conduits et le matériau composite réfractaire.

C'est pourquoi la présente invention a pour but de fournir une structure réfractaire refroidie utilisant un matériau composite à matrice céramique et intégrant les fonctions de paroi réfractaire résistant à des températures très élevées, de tenue mécanique, et de refroidissement.

Conformément à l'invention, ce but est atteint grâce à une structure caractérisée en ce qu'elle est formée par un matériau composite ayant une texture de renfort et une matrice, la composition de la matrice variant pratiquement sans discontinuité, dans l'épaisseur de la structure, depuis une matière essentiellement réfractaire, au voisinage d'une face avant destinée à être exposée à des températures très élevées, jusqu'à une matière essentiellement conductrice de la chaleur.

Le refroidissement de la structure peut être réalisé par radiation du côté de la face arrière, opposée à la face avant, et au voisinage de laquelle la matrice est essentiellement conductrice de la chaleur, et/ou par balayage de la face arrière par un fluide.

Des conduits destinés à permettre la circulation d'un fluide de refroidissement peuvent aussi être disposés au sein de la structure, dans une partie de celle-ci où la matrice est essentiellement conductrice de la chaleur.

L'invention a aussi pour but de fournir un procédé permettant la fabrication d'une telle structure réfractaire en matériau composite ayant une matrice de composition variable.

Conformément à l'invention, un tel procédé comprend les étapes qui consistent à :
- réaliser une préforme fibreuse dont la forme correspond sensiblement à celle de la structure à fabriquer et ayant un taux volumique de fibres décroissant dans l'épaisseur de la préforme à partir d'une première face de celle-ci correspondant à la face avant de la structure destinée à être exposée à des températures très élevées,
- former sur les fibres de la préforme un revêtement réfractaire par infiltration chimique en phase vapeur, l'infiltration étant poursuivie jusqu'à occupation sensiblement complète de la porosité accessible de la préforme au voisinage de la première face, et
- former une matrice en une matière conductrice de la chaleur au sein de la porosité résiduelle accessible.

Selon une mise en oeuvre particulière du procédé conforme à l'invention, avant formation de la matrice conductrice de la chaleur, des conduits de circulation de fluide de refroidissement sont mis en place du côté d'une deuxième face de la préforme opposée à la première face, et la matrice en matière conductrice de la chaleur est formée au sein de la porosité accessible de la préforme et autour des conduits.

La préforme fibreuse est par exemple formée par empilement de strates, les strates ayant des densités variables et étant réparties dans la préforme afin d'obtenir la variation souhaitée du taux volumique de fibres.

L'étape d'infiltration chimique en phase vapeur permet de déposer sur les fibres de la préforme un revêtement réfractaire d'épaisseur sensiblement constante. L'infiltration est poursuivie jusqu'à occuper sensiblement toute la porosité accessible de la préforme au voisinage de la première face de celle-ci. Mais, du fait de la variation du taux volumique de fibres, la matière réfractaire n'occupe pas toute la porosité accessible de la préforme, et il subsiste une porosité accessible résiduelle d'autant plus importante que l'on s'éloigne de la première face. Après mise en place de la matière conductrice de la chaleur au sein de cette porosité résiduelle, on obtient donc une matrice qui passe sans discontinuité d'une nature essentiellement réfractaire au voisinage de la face destinée à être exposée aux températures élevées à une nature essentiellement conductrice de la chaleur au voisinage de la face opposée.

Ainsi, grâce à l'invention, il est possible de réaliser une structure qui allie les fonctions de paroi réfractaire, de tenue mécanique, du fait de la nature composite du matériau constitutif, et de refroidissement. En outre, les contraintes d'origine thermique sont minimisées puisque la partie de la structure la plus chaude est celle dans laquelle la matrice essentiellement réfractaire a un coefficient de dilatation thermique moins élevé, tandis que la partie la moins chaude est celle dans laquelle la matrice est en une matière essentiellement conductrice de la chaleur qui a un coefficient de dilatation thermique plus élevé. Ainsi, la structure selon l'invention présente-t-elle une bonne tenue aux chocs thermiques et à des gradients thermiques importants entre ses faces avant et arrière.

La matière réfractaire déposée par infiltration chimique en phase vapeur est choisie parmi le carbone et les céramiques. Parmi ces dernières figurent notamment les carbures (carbure de silicium, carbure de zirconium, carbure de bore par exemple),les borures (diborure de zirconium, diborure de titane, par exemple), les oxydes (zircone, par exemple).

La matière conductrice de la chaleur est déposée par exemple à l'état fondu et est choisie parmi des matières semi-réfractaires parmi lesquelles, notamment,le silicium, des métaux et alliages métalliques (pouvant comprendre de très bons conducteurs de la chaleur tels que l'aluminium ou le cuivre), et des compositions verrières.

D'autres techniques de mise en place de la matrice conductrice de la chaleur pourront être utilisées, par exemple une imprégnation liquide par un précurseur de cette matrice, suivie d'un traitement thermique de transformation du précurseur.

La préforme fibreuse qui constitue le renfort du matériau composite est en fibres réfractaires choisies parmi les fibres de carbone et les fibres céramiques, par exemple carbure de silicium, alumine, zircone, ...

Deux exemples de réalisation de l'invention seront maintenant décrits, à titre indicatif mais non limitatif, en référence au dessin annexé sur lequel :
- les figures 1A à 1C illustrent très schématiquement et en coupe une structure conforme à l'invention à différents stades de sa fabrication, et
- les figures 2A et 2B illustrent très schématiquement et en coupe une autre structure conforme à l'invention à différents stades de sa fabrication.

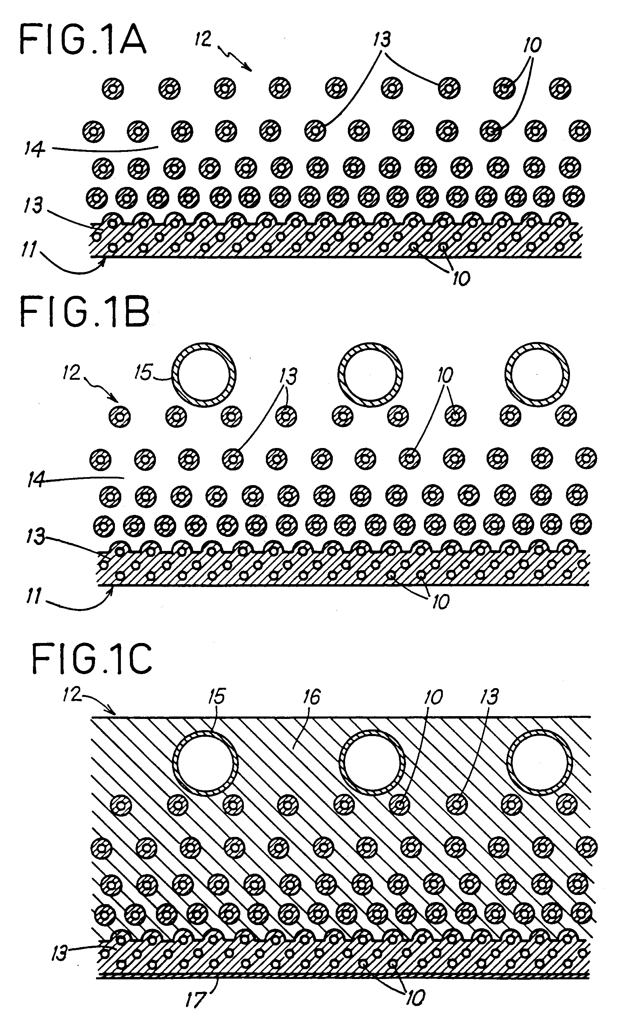

Dans l'exemple illustré par les figures 1A à 1C, la formation d'une matrice de composition variable est obtenue grâce à une préforme fibreuse dans laquelle le taux volumique de fibres varie d'une face de la préforme à la face opposée.

Par taux volumique de fibres, on entend ici le pourcentage de volume unitaire de préforme effectivement occupé par les fibres.

Pour élaborer une préforme avec un taux volumique de fibres variables, on utilise par exemple des textures bidimensionnelles de densités différentes telles que des tissus peu aérés ou des nappes de fils en câbles, qui ont une densité relativement élevée et des voiles de fibres qui ont une densité relativement faible.

La préforme fibreuse a une forme qui correspond à celle de la texture ou de l'élément de texture à réaliser. On notera incidemment qu'un avantage de la présente invention est qu'il permet de réaliser des structures de grandes dimensions, éventuellement de formes complexes et de faible épaisseur en mettant en oeuvre des techniques connues de fabrication de pièces en matériaux composites.

La préforme fibreuse est élaborée par empilement de strates de textures bidimensionnelles formées de fibres 10, en disposant une majorité de strates de densité élevée du côté de la face 11 correspondant à la face de la structure destinée à être exposée à des températures élevées, et une majorité de strates de faible densité du côté de la face 12 opposée à la face 11 (figure 1A).

Par exemple, on dispose des strates de tissu du côté de la face 11, en intercalant éventuellement une strate de voile de fibres entre deux strates de tissu, puis on augmente graduellement la proportion de strates de voile de fibres en diminuant de façon corrélative la proportion de strates de tissu pour finir par des strates uniquement en voile de fibres du côté de la face 12.

Avantageusement, les strates sont liées les unes aux autres par aiguilletage, lequel est réalisé au fur et à mesure de l'empilement des strates, c'est-à-dire après chaque ajout d'une nouvelle strate ou d'un certain nombre de nouvelles strates.

La préforme fibreuse est par exemple réalisée à partir de fibres de carbone et le taux volumique de fibres varie par exemple d'une valeur comprise entre 30 et 50 % au voisinage de la face 11 à une valeur comprise entre 5 et 15 % au voisinage de la face 12.

Le taux de fibres doit avoir une valeur maximale limitée afin de laisser une porosité accessible pour la densification par la matrice et une valeur minimale supérieure à un certain seuil pour que les fibres participent effectivement à la tenue mécanique de la structure.

La préforme fibreuse ainsi élaborée, et maintenue par exemple dans un outillage, est densifiée par infiltration chimique en phase vapeur d'une matière réfractaire, par exemple du carbone ou du carbure de silicium. Il se forme ainsi sur les fibres un revêtement d'épaisseur sensiblement constante. L'infiltration est poursuivie jusqu'à ce que l'épaisseur du revêtement soit telle que la porosité accessible de la préforme au voisinage de la face 11 soit pratiquement totalement occupée par la matière réfractaire 13.

En raison de la diminution du taux de fibres au fur et à mesure que l'on s'éloigne de la face 11, le revêtement réfractaire formé sur les fibres laisse une porosité résiduelle 14 progressivement de plus en plus importante.

Des tubes ou conduits 15 pour la circulation du fluide de refrodissement sont disposés du côté de la face 12 de la préforme (figure 1B).

Ensuite, une matière conductrice de la chaleur 16, par exemple du silicium, est coulée à l'état fondu pour achever la densification de la préforme fibreuse en occupant la porosité résiduelle 14 et noyer les tubes 15 (figure 1C).

La coulée de la matière 16 peut être effectuée dans un moule donnant à la structure sa forme définitive. Les tubes 15 sont de préférence maintenus en des emplacements déterminés dans le moule pour ne pas comprimer ou déformer la préforme pré-densifiée en étant simplement posés sur la face 12 de celle-ci.

Un revêtement 17 de protection antioxydation peut être formé sur la face 12. Le revêtement 17 est par exemple constitué par une couche réfractaire telle qu'une couche de carbure de silicium formée par dépôt en phase vapeur et complétée par dépôt d'une couche de verre réfractaire aux propriétés cicatrisantes afin de colmater des fissures éventuelles.

La matière constitutive des tubes 15 est choisie pour être compatible avec et non corrodable par la matrice conductrice de la chaleur 16 et le fluide de refroidissement qui peut être par exemple du sodium, du lithium ou de l'hydrogène.

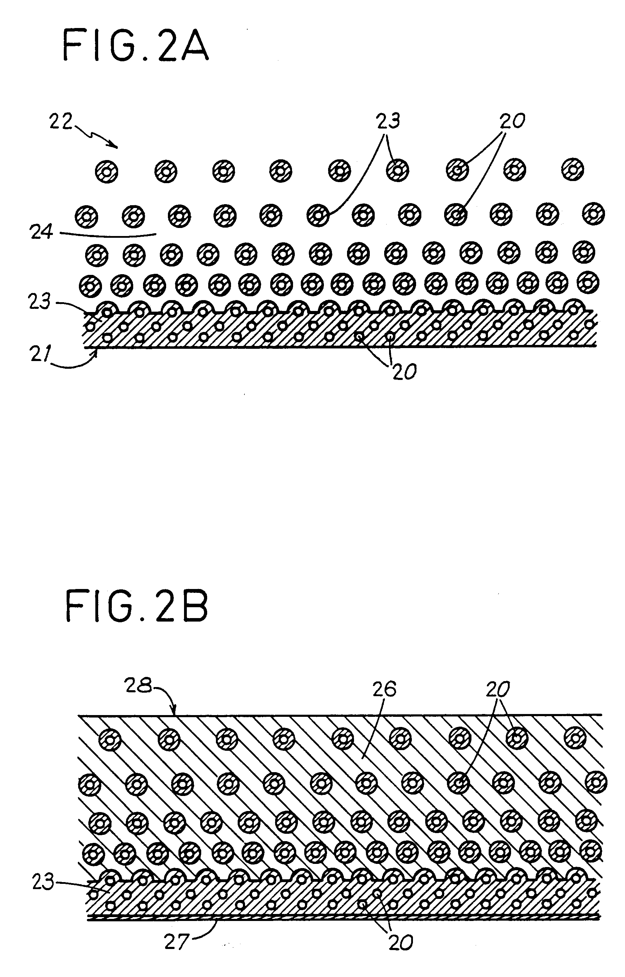

Un autre mode de réalisation d'une structure conforme à l'invention est illustré par les figures 2A et 2B.

Comme dans le mode de réalisation précédent, une préforme fibreuse à taux de fibres variable est élaborée par empilement et aiguilletage de strates de textures bidimensionnelles formées de fibres 20, en disposant une majorité de strates de densité élevée du côté de la face 21 correspondant à la face de la structure destinée à être exposée à des températures élevées, et une majorité de strates de faible densité du côté de la face 22 opposée à la face 21 (figure 2A).

La préforme est densifiée par infiltration chimique en phase vapeur pour former sur les fibres un revêtement 23 en matière réfractaire, par exemple du carbone ou du carbure de silicium. La densification est poursuivie jusqu'à ce que la porosité accessible du côté de la face 21 soit pratiquement totalement occupée, laissant une porosité résiduelle 24 de plus en plus importante en direction de la face 22.

Une matière 26 conductrice de la chaleur, par exemple du silicium est coulée à l'état fondu pour achever la densification de la préforme en occupant la porosité résiduelle 24 (figure 2B). La coulée de la matrice 26 peut être effectuée dans un moule donnant à la structure sa forme définitive.

Un revêtement 27 de protection anti-oxydation peut être formé sur la face avant 22.

En service, le refroidissement de la structure se fait par rayonnement à la face arrière 28 de la structure.

Afin d'accroître l'efficacité du refroidissement, un balayage de la face arrière 28 par un fluide de refroidissement peut être envisagé.

Il est également possible d'accroître le rayonnement au moyen d'ailettes formées sur la face arrière 28, par exemple par moulage d'une seule pièce avec la matrice conductrice 26, ou au moyen d'un revêtement métallique déposé sur la face arrière 28, par exemple par projection par plasma ou par dépôt chimique en phase vapeur.

Enfin, des conduits de circulation de fluide de refroidissement peuvent être fixés à la face arrière 28.

Comme déjà indiqué, un avantage essentiel de la présente invention est qu'il permet de réaliser une structure qui remplit à la fois les fonctions de paroi réfractaire, de tenue mécanique et de refroidissement avec une continuité du matériau constitutif, sans interfaces.

Un autre avantage tient à la relative simplicité du procédé de fabrication qui met en oeuvre des techniques connues de réalisation de pièces en matériaux composites. Comme déjà signalé, ces techniques permettent en outre, le cas échéant, de réaliser des structures minces, de grandes dimensions, et de formes complexes.

Enfin, l'invention permet d'obtenir des structures remarquablement légères. Ainsi, une paroi d'épaisseur 8 mm, telle qu'illustrée par la figure 1C, réalisée avec une préforme en fibres de carbone, une matrice ayant une partie réfractaire en carbure de silicium et une partie conductrice de la chaleur en silicium, et des tubes minces en molybdène de 3 mm de diamètre a une masse surfacique comprise entre 15 et 20 kg/m².

## Revendications

1. Structure réfractaire refroidie ayant une face avant destinée à être exposée à des températures très élevées, caractérisée en ce qu'elle est formée par un matériau composite ayant une texture de renfort et une matrice, la composition de la matrice variant pratiquement sans discontinuité, dans l'épaisseur de la structure, depuis une matière essentiellement réfractaire, (13 ; 23) au voisinage de la face avant destinée à être exposée à des températures très élevées, jusqu'à une matière essentiellement conductrice de la chaleur (16 ; 26).

2. Structure selon la revendication 1, caractérisée en ce que des conduits (15) destinés à permettre la circulation d'un fluide de refroidissement sont disposés au sein de la structure, dans une partie de celle-ci où la matrice est essentiellement conductrice de la chaleur (16).

3. Structure réfractaire selon l'une quelconque des revendication 1 et 2, caractérisée en ce que la texture de renfort est formée de fibres (10 ; 20) choisies parmi les fibres de carbone et les fibres céramiques.

4. Structure réfractaire selon la revendication 3, caractérisée en ce que le taux volumique de fibres dans le matériau composite varie en décroissant dans l'épaisseur de la structure depuis la face destinée à être exposée à des températures élevées.

5. Structure réfractaire selon l'une quelconque des revendications 1 à 4, caractérisée en ce que la matière essentiellement réfractaire (13 ; 23) formant en partie la matrice est choisie parmi le carbone et les céramiques.

6. Structure réfractaire selon l'une quelconque des revendications 1 à 5, caractérisée en ce que la matière essentiellement conductrice de la chaleur (16 ; 26) formant en partie la matrice est choisie parmi le silicium, des métaux, des alliages métalliques, et des compositions verrières.

7. Procédé de fabrication d'une structure réfractaire refroidie selon l'une quelconque des revendications 1 à 6, caractérisé en ce qu'il comprend les étapes qui consistent à :
- réaliser une préforme fibreuse dont la forme correspond sensiblement a celle de la structure à fabriquer et ayant un taux volumique de fibres décroissant dans l'épaisseur de la préforme à partir d'une première face de celle-ci correspondant à la face de la structure destinée à être exposée à des températures très élevées,
- former sur les fibres de la préforme un revêtement réfractaire par infiltration chimique en phase vapeur, l'infiltration étant poursuivie jusqu'à occupation sensiblement complète de la porosité accessible de la préforme au voisinage de la première face, et
- former une matrice en une matière conductrice de la chaleur au sein de la porosité résiduelle accessible.

8. Procédé selon la revendication 7, caractérisé en ce que, avant formation de la matrice conductrice de la chaleur, des conduits de circulation de fluide de refroidissement sont mis en place du côté d'une deuxième face de la préforme opposée à la première face, et la matrice en matière conductrice de la chaleur est formée au sein de la porosité résiduelle accessible de la préforme et autour des conduits.

9. Procédé selon l'une quelconque des revendications 7 et 8, caractérisé en ce que la préforme fibreuse est formée par empilement de strates, les strates ayant des densités variables et étant réparties dans la préforme afin d'obtenir la variation souhaitée du taux volumique de fibres.

10. Procédé selon l'une quelconque des revendications 7 à 9, caractérisé en ce que la matière réfractaire déposée par infiltration chimique en phase vapeur est choisie parmi le carbone et les céramiques.

11. Procédé selon l'une quelconque des revendications 7 à 10, caractérisé en ce que la matière conductrice de la chaleur est choisie parmi le silicium, les métaux et alliages métalliques et les compositions verrières

12. Procédé selon l'une quelconque des revendications 7 à 11, caractérisé en ce qu'un revêtement de protection antioxydation est formé sur la face de la structure destinée à être exposée à des températures élevées.

## Claims

1. Cooled refractory structure having a front face intended to be exposed to very high temperatures, characterized in that it is formed of a composite material having a reinforcement texture and a matrix, the composition of the matrix varying substantially without discontinuity along the thickness of the structure, from being an essentially refractory material, (13; 23) in the region of the front face intended to be exposed to very high temperatures, to being an essentially heat-conductive material (16; 26).

2. Structure according to claim 1, characterized in that cooling fluid circulation conduits (15), designed to allow the flow of a cooling fluid, are provided within said structure, in a part thereof where said matrix is essentially heat-conductive (16).

3. Refractory structure according to any one of claims 1 and 2, characterized in that the reinforcement texture is made of fibers (10; 20) chosen among carbon fibers ad ceramic fibers.

4. Refractory structure according to claim 3, characterized in that said composite material has a volume ratio of fibers that decreases along the thickness direction of said structure from said front face intended to be exposed to very high temperatures.

5. Refractory structure according to any one of claims 1 to 4, characterized in that the essentially refractory material (13; 23) forming a part of said matrix is chosen among carbon and ceramics.

6. Refractory structure according to any one of claims 1 to 5, characterized in that the essentially heat-conductive material (16; 26) partially forming said matrix is chosen among silicon, metals, metal alloys and glass compounds.

7. Process for the manufacture of cooled refractory structure according to any one of claims 1 to 6, characterized in that it comprises the steps of:
- making a fibrous preform whose shape corresponds substantially to that of the structure being manufactured, and having a volume ratio of fibers which decreases along a thickness direction of the preform, from a first face thereof corresponding to a face of the structure intended to be exposed to very high temperatures,
- forming a refractory coating on the fibers of the preform by chemical vapor infiltration, said infiltration being continued up to a substantially complete occupation of the accessible pores of the preform at the level of said first face, and
- forming a matrix from a heat-conductive material within the residual accessible pores.

8. Process according to claim 7, characterized in that prior to said step of forming a matrix of heat-conductive material, cooling fluid circulation conduits are placed near a second face of the preform, opposite said first face, and said matrix made of heat-conductive material is formed within the accessible pores of the preform and around said conduits.

9. Process according to any one of claims 7 and 8, characterized in that the fibrous preform is made by superposing layers, the layers having variable densities and being distributed in said preform in order to obtain a required degree of fiber volume ratio.

10. Process according to any one of claims 7 to 9, characterized in that said refractory material deposited by the chemical vapor infiltration is chosen among carbon and ceramics.

11. Process according to any one of claims 7 to 10, characterized in that said heat-conductive material is chosen among silicon, metals and metal alloys, and glass compounds.

12. Process according to any one of claims 7 to 11, characterized in that an anti-oxidizing protective coating is formed on the face of the structure intended to be exposed to said high temperatures.

## Patentansprüche

1. Gekühlter, feuerfester Körper mit einer Vorderfläche, die sehr hohen Temperaturen ausgesetzt werden soll,
**dadurch gekennzeichnet, daß**
er aus einem Verbundmaterial gebildet ist, das eine Verstärkungsstruktur und eine Matrix aufweist, wobei sich die Zusammensetzung der Matrix praktisch ohne Diskontinuität innerhalb der Dicke des Körpers von einem im wesentlichen feuerfesten Material (13; 23) nahe der Vorderfläche, die sehr hohen Temperaturen ausgesetzt werden soll, bis zu einem im wesentlichen wärmeleitenden Material (16; 26) ändert.

2. Körper nach Anspruch 1,
**dadurch gekennzeichnet, daß**
Leitungen (15), die die Zirkulation eines Kühlmittels ermöglichen sollen, innerhalb des Körpers in einem Teil (16) hiervon angeordnet sind, wo die Matrix im wesentlichen wärmeleitend ist.

3. Feuerfester Körper nach Anspruch 1 oder 2,
**dadurch gekennzeichnet, daß**
die Verstärkungsstruktur aus Fasern (10; 20) gebildet ist, die aus Kohlenstoff- und Keramikfasern ausgewählt sind.

4. Feuerfester Körper nach Anspruch 3,
**dadurch gekennzeichnet, daß**
sich der Volumenanteil der Fasern im Verbundmaterial abnehmend innerhalb der Dicke des Körpers ausgehend von der Fläche, die hohen Temperaturen ausgesetzt werden soll, ändert.

5. Feuerfester Körper nach einem der Ansprüche 1 bis 4,
**dadurch gekennzeichnet, daß**
das im wesentlichen feuerfeste Material (13; 23), das einen Teil der Matrix bildet, aus Kohlenstoff und Keramikmaterialien ausgewählt ist.

6. Feuerfeste Struktur nach einem der Ansprüche 1 bis 5,
**dadurch gekennzeichnet, daß**
das im wesentlichen wärmeleitende Material (16; 26), das einen Teil der Matrix bildet, aus Silizium, Metallen, Metall-Legierungen und Glaszusammensetzungen ausgewählt ist.

7. Verfahren zur Herstellung eines gekühlten, feuerfesten Körpers nach einem der Ansprüche 1 bis 6,
**gekennzeichnet durch**
die folgenden Schritte:
- Herstellung eines faserigen Vorformlings, dessen Form im wesentlichen der des herzustellenden Körpers entspricht und der einen Volumenanteil der Fasern hat, der innerhalb der Dicke des Vorformlings von einer ersten Fläche hiervon aus abnimmt, die der Fläche des Körpers entspricht, die sehr hohen Temperaturen ausgesetzt werden soll,
- Bildung eines feuerfesten Überzugs auf den Fasern des Vorformlings durch chemische Infiltration in der Dampfphase, wobei die Infiltration bis zur im wesentlichen vollständigen Durchsetzung der erreichbaren Porosität des Vorformlings nahe der ersten Fläche fortgesetzt wird, und
- Bildung einer wärmeleitenden Matrix innerhalb der erreichbaren Restporosität.

8. Verfahren nach Anspruch 7,
**dadurch gekennzeichnet, daß**
vor der Bildung der wärmeleitenden Matrix Kühlmittel-Umwälzleitungen nahe einer zweiten Fläche des Vorformlings eingesetzt werden, die der ersten Fläche gegenüberliegt, und daß die Matrix aus wärmeleitendem Material innerhalb der erreichbaren Restporosität des Vorformlings und um die Leitungen gebildet wird.

9. Verfahren nach Anspruch 7 oder 8,
**dadurch gekennzeichnet, daß**
der faserige Vorformling durch Stapeln von Schichten gebildet wird, die unterschiedliche Dichten haben und im Vorformling verteilt sind, um die gewünschte Änderung des Volumenanteils der Fasern zu erhalten.

10. Verfahren nach einem der Ansprüche 7 bis 9,
**dadurch gekennzeichnet, daß**
das feuerfeste Material, das durch chemische Infiltration in der Dampfphase abgelagert wird, aus Kohlenstoff und Keramikmaterialien ausgewählt wird.

11. Verfahren nach einem der Ansprüche 7 bis 9,
**dadurch gekennzeichnet, daß**
die wärmeleitende Matrix aus Silizium, Metall und Metall-Legierungen und Glaszusammensetzungen ausgewählt wird.

12. Verfahren nach einem der Ansprüche 7 bis 11,
**dadurch gekennzeichnet, daß**
ein Antioxidations-Schutzüberzug auf der Fläche des Körpers gebildet wird, die hohen Temperaturen ausgesetzt werden soll.
